(19) Europäisches Patentamt
European Patent Office
Office européen des brevets

(11) EP 0 636 855 B1

(12) **EUROPÄISCHE PATENTSCHRIFT**

(45) Veröffentlichungstag und Bekanntmachung des Hinweises auf die Patenterteilung:
**07.01.1998 Patentblatt 1998/02**

(51) Int Cl.[6]: **G01B 5/00**, G01B 5/012, G01B 7/012, G01B 11/00

(21) Anmeldenummer: **94111701.2**

(22) Anmeldetag: **27.07.1994**

(54) **Mehrkoordinaten-Tastkopf**

Multi-coordinates feeler head

Tête de palpage de coordonnées multiples

(84) Benannte Vertragsstaaten:
**DE FR GB IT**

(30) Priorität: **31.07.1993 DE 4325743**

(43) Veröffentlichungstag der Anmeldung:
**01.02.1995 Patentblatt 1995/05**

(73) Patentinhaber: **Dr. Johannes Heidenhain GmbH**
**D-83292 Traunreut (DE)**

(72) Erfinder: **Ernst, Alfons, Dipl.-Ing.**
**D-83301 Traunreut (DE)**

(56) Entgegenhaltungen:
EP-A- 0 270 322     EP-A- 0 551 164
DE-A- 3 725 205     DE-C- 3 508 396
FR-A- 2 375 580     GB-A- 2 042 189

**Beschreibung**

Die Erfindung bezieht sich auf einen Mehrkoordinaten-Tastkopf gemäß dem Oberbegriff des Anspruches 1. Aus diversen Druckschriften sind Mehrkoordinaten-Tastköpfe bekannt. Alle verfügen über Sensoren, die bei Antastung eines Objektes ein Antastsignal liefern. Die Art der Sensoren ist unterschiedlich: Es können beispielsweise elektrische Schalter sein, oder lichtelektrische Meßsysteme oder auch Abstandssensoren. Derartige Ausführungsformen finden sich in DE- 23 47 633-C3; DE- 35 08 396-C1; EP- 0 361 164-A1.

Bei Antastung von Objekten mittels eines derartigen Mehrkoordinaten-Tastkopfes wird ein das Objekt berührender Taststift ausgelenkt, der an seinem freien Ende eine Tastkugel trägt. Die Bauart der Sensoren bedingt es, daß die Generierung eines Antastsignales nach mehr oder weniger Auslenkung des Taststiftes ausgelöst wird.

In der DE-A-37 25 205 ist ein Mehrkoordinaten-Tastkopf mit einem, in mehreren Koordinatenrichtungen auslenkbaren Taststift beschrieben. Der Taststift ist in seinem Gehäuse durch Blattfedern elastisch aufgehängt. Die Blattfedern verlaufen ausschließlich parallel zur Achse des Taststiftes. Eine Auslenkung des Taststiftes in Richtung der Taststiftachse ist über diese Blattfedern nicht möglich.

Der Erfindung liegt die Aufgabe zugrunde, einen Mehrkoordinaten-Tastkopf zu schaffen, der einfach aufgebaut ist, eine hohe Meßgenauigkeit und eine hohe Ansprechempfindlichkeit aufweist.

Diese Aufgabe wird durch die Merkmale des Anspruches 1 gelöst.

Durch die Merkmale der abhängigen Ansprüche wird ein erfindungsgemäßer Mehrkoordinaten-Tastkopf vorteilhaft ausgestaltet.

Die Vorteile des erfindungsgemäßen Mehrkoordinaten-Tastkopfes liegen darin, daß bereits geringste Antastkräfte eine Auslösung eines Meßsignales bewirken, welches ein Schaltsignal, aber auch ein Meßwert bildendes Signal sein kann. Dabei ist von besonderem Vorteil, daß in axialer Richtung ein großer Hub möglich ist.

Anhand der Zeichnungen wird die Erfindung durch mehrere Ausführungsbeispiele näher erläutert.

Es zeigt

Figur 1      einen Mehrkoordinaten-Tastkopf im Querschnitt;

Figur 1a      eine stark vereinfachte Draufsicht auf den inneren Aufbau und

Figur 2      eine Variante eines Mehrkoordinaten-Tastkopfes

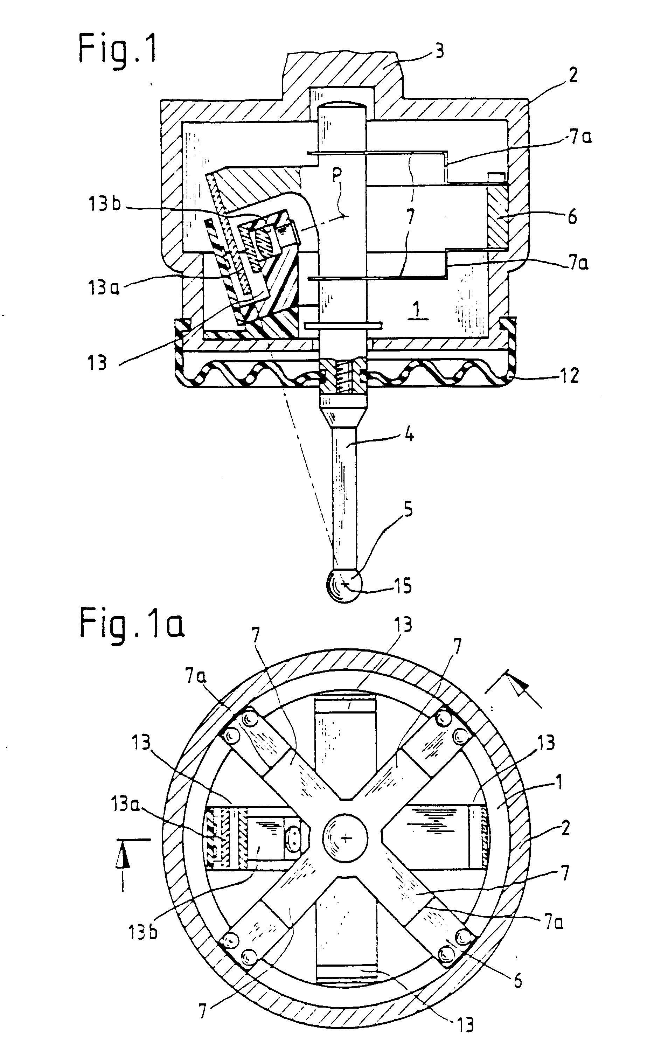

Ein in Figur 1 dargestellter Mehrkoordinaten-Tastkopf 1 weist ein Gehäuse 2 auf, welches mit Hilfe eines Schaftes 3 in eine Maschine eingespannt werden kann. Aus dem Gehäuse 2 ragt auf der dem Schaft 3 gegenüberliegenden Seite ein Taststift 4 heraus, der an seinem freien Ende eine Tastkugel 5 trägt. Der Taststift 4 ist über ein mit ihm verbundenes Federelement 6 im Gehäuse 2 gelagert. Die Lagerung im Gehäuse 2 erfolgt mittels dieses elastischen Federelementes 6, welches in diesem Fall aus kreuzförmigen Blattfedern 7 besteht, die ihrerseits mit dem Gehäuse 2 verbunden sind. Ein Balg 12 schließt das zur Taststiftseite offene Gehäuse 2 dichtend ab.

Die vorbeschriebene Anordnung ist in der schematischen Draufsicht in Figur 1a erkennbar, aus der auch die vierfache Anordnung der Sensoren 13 ersichtlich ist. Das sich in axialer Richtung erstreckende Federteil 7a erlaubt eine Längenzunahme, die eine Membrane - wie sie etwa aus dem Stand der Technik bekannt ist - zerstören würde. Außerdem ergibt sich eine gewisse Nachgiebigkeit in den beiden anderen Koordinaten Richtungen.

Durch entsprechende Wahl der Gestaltparameter und des Abstandes der Blattfedern 7 kann der Mehrkoordinaten-Tastkopf 1 mit gleicher Kennlinie für die Antastkraft, auch Steifigkeit genannt, in den Koordinaten-Richtungen X, Y und Z ausgerüstet werden.

Zwischen den Armen der kreuzförmigen Blattfedern 7 werden Meßaufnehmer als Sensoren 13 angeordnet. Bei einer Antastkraft in x- oder y-Richtung an der Tastkugel 5 ergibt sich eine Kippbewegung des Taststiftes 4 mit dem Pol in P. Durch P und senkrecht zur Meßrichtung eines Maßstabes 13a ist die optische Achse eines Abtastkopfes 13b gelegt, so daß sich bei kleinen Auslenkungen der Tastkugel 5 in x- und y-Richtung der Abstand zwischen Maßstab 13a und Abtastkopf 13b nicht ändert.

Im Gehäuse 2 befinden sich Sensoren 13, die als lichtelektrische Längenmeßeinrichtungen ausgebildet und so ausgerichtet sind, daß sich ihre Meßachsen im Zentrum 15 der Tastkugel 5 schneiden, wobei dieses Zentrum 15 einen sogenannten Antast-Pol 15 bildet.

Die Sensoren 13 bestehen aus Maßstab 13a und Abtastkopf 13b und sind so angeordnet, daß ihre Mittellinien, die der Meßrichtung entsprechen, sich im Kugelmittelpunkt 15 treffen. Die optischen Achsen der Abtastköpfe 13b sind senkrecht zur Verbindungslinie Mitte Sensor 13 -> Kugelmitte 15 angeordnet oder bilden eine Sphäre mit dem Zentrum im Kugelmittelpunkt 15. Berührt die Tastkugel 5 ein Werkstück, so verformt sich zunächst das Federelement 7. Dadurch ändert sich die Relativlage der Elemente 13a und 13b im Sensor 13 und es entstehen durch die Sensoren 13 Signale, aus denen die Bewegung der Tastkugel 5 in x-, y- und z-Richtung berechnet werden kann.

Wenn in einer Betriebsart, die in der Fachsprache "scannen" oder "digitalisieren" heißt, gearbeitet wird, muß die Tastkugel 5 nur wenig ausgelenkt werden, so daß der Maßstab 13a seine Ruheposition kaum verläßt.

Vorteilhaft ist dabei, daß es sich um einen messenden Mehrkoordinaten-Tastkopf mit sehr einfachem Aufbau handelt. Es ist eine hohe Meßgenauigkeit zu erzielen, da außer der Verbiegung des Taststiftes 4, die sich leicht rechnerisch korrigieren läßt, keine mechanischen Deformationen vorkommen. Der Meßbereich ist zwar gering, für diese Betriebsart aber ausreichend.

Die Meßwerte sind aus den Sensorsignalen nach einem einfachen Algorithmus zu errechnen:

Sind S1, S2, S3, S4 die Signale der Sensoren 13, so ergibt sich bei vier Sensoren 13 in den Halbkoordinaten X bzw. -X und Y bzw. -Y in erster Näherung der mathematische Zusammenhang:

$$x = (S1-S2) * (\sin \alpha) / 2 = C1 * (S1-S2)$$

$$y = (S3-S4) * (\sin \alpha) / 2 = C1 * (S3-S4)$$

$$z = (S1+S2+S3+S4) * (\cos \alpha) / 4 = C2 * (S1+S2+S3+S4)$$

Die Erzeugung eines einfachen Schaltsignales erfordert lediglich eine entsprechende Ausgestaltung der Sensoren. Diese Sensoren können Abstandssensoren sein, die als Näherungsschalter ausgebildet sind, oder ähnliche Funktionsweisen haben.

Selbstverständlich sind als Sensoren auch inkrementale oder codierte Meßsysteme vorsehbar, die auf einem anderen physikalischen Wirkprinzip beruhen. Derartige Anordnungen müssen nicht ausdrücklich beschrieben werden.

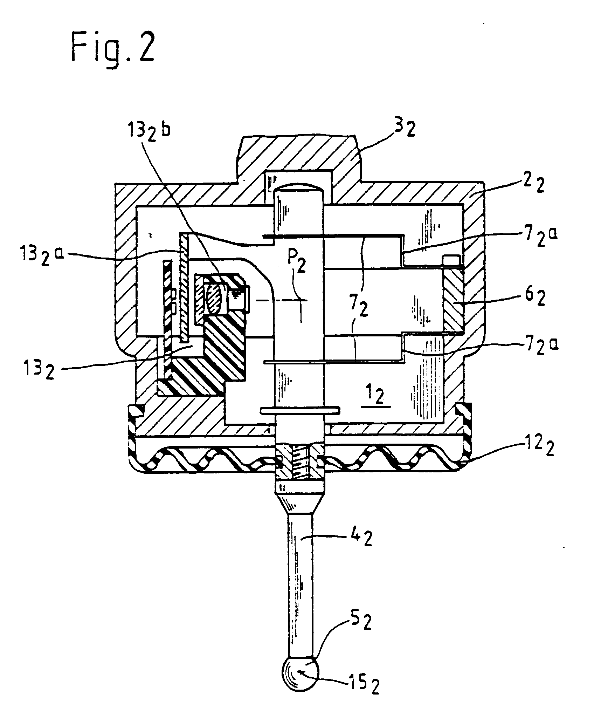

Um die Übersicht zu erleichtern, sind beim zweiten Ausführungsbeispiel gemäß Figur 2 wirkungsmäßig gleichartige Bauelemente mit gleichen Bezugszeichen versehen, denen als Index die Figurenbezifferung nachgestellt ist.

Ein Mehrkoordinaten-Tastkopf $1_2$ besteht aus den Grundelementen Gehäuse $2_2$ mit Schaft $3_2$ und Taststift $4_2$, der mittels einer Lagerung im Gehäuse $2_2$ beweglich gelagert ist. Die Lagerung besteht wieder aus einem Federelement $6_2$ in Form von zwei kreuzförmigen Blattfedern $7_2$, die so geformt sind, daß in axialer Richtung ein großer Hub möglich ist. Abweichend vom vorbeschriebenen Beispiel verläuft hier die Meßrichtung des Maßstabes $13_2$a parallel zur Achse des Taststiftes $4_2$. Eine senkrecht zu dieser Meßrichtung verlaufende optische Achse des Abtastkopfes $13_2$b schneidet die Achse des Taststiftes $4_2$ ebenfalls in einem Pol $P_2$, um den der Taststift kippt, wenn er in x- oder y-Richtung ausgelenkt wird.

Bei der in Figur 2 dargestellten Lösung können die Auslenkungen in den Richtungn X und Y nicht direkt gemessen werden. Sie können aber nach einer Kalibrierung aus der meßbaren Kippbewegung des Taststiftes $4_2$ mit genügender Näherung ermittelt werden.

Wenn die sternförmigen Blattfedern dreiarmig ausgeführt werden, ist es sinnvoll auch drei Sensoren vorzusehen.

## Patentansprüche

1. Mehrkoordinaten-Tastkopf (1; $1_2$) mit wenigstens einem, in mehrere Koordinatenrichtungen auslenkbarem Taststift (4; $4_2$) zum Antasten eines Objektes, wobei der Taststift (4; $4_2$) mittels einer elastischen Aufhängung (6; $6_2$) in seinem Gehäuse (2; $2_2$) befestigt ist, dadurch gekennzeichnet, daß die elastische Aufhängung (6; $6_2$) aus einem Federelement (7, $7_2$) in Form von mehreren sternförmig angeordneten Blattfederarmen (7; $7_2$) besteht, wobei die Blattfederarme (7; $7_2$) über wenigstens eine parallel zur Taststiftachse und eine senkrecht zur Taststiftachse verlaufende Federkomponente (7a; $7_2$a) verfügen.

2. Mehrkoordinaten-Tastkopf nach Anspruch 1, dadurch gekennzeichnet, daß die Blattfederarme (7; $7_2$) eine parallel zur Taststiftachse verlaufende Kröpfung (7a; $7_2$a) aufweisen und die Blattfederarme (7; $7_2$) vor und nach der Kröpfung senkrecht zur Taststiftachse verlaufen.

3. Mehrkoordinaten-Tastkopf nach Anspruch 1, dadurch gekennzeichnet, daß mehrere Federelemente (7; $7_2$) senkrecht zur Taststiftachse beabstandet angeordnet sind.

4. Mehrkoordinaten-Tastkopf nach Anspruch 1, dadurch gekennzeichnet, daß Sensoren (13; $13_2$) zum Detektieren des Antastvorganges vorgesehen sind.

5. Mehrkoordinaten-Tastkopf nach den Ansprüchen 3 und 4, dadurch gekennzeichnet, daß die Sensoren (13; $13_2$) zwischen den senkrecht zur Taststiftachse beabstandeten Federelementen (7; $7_2$) angeordnet sind.

6. Mehrkoordinaten-Tastkopf nach Anspruch 4, dadurch gekennzeichnet, daß die Sensoren (13) so angeordnet sind, daß sich ihre Meßachsen in einem Antast-Pol schneiden, der durch das Zentrum (15) einer Tastkugel (5) gebildet wird, die sich am Ende des Taststiftes (4) befindet.

7. Mehrkoordinaten-Tastkopf nach Anspruch 4, dadurch gekennzeichnet, daß die Sensoren ($13_2$) als lichtelektrische Längenmeßeinrichtungen ausgebildet und so angeordnet sind, daß die optische Achse des Abtastkopfes ($13_2$b) im rechten Winkel zur Meßachse des Maßstabes ($13_2$a) verläuft und die Taststiftachse in einem Pol ($P_2$) schneidet.

8. Mehrkoordinaten-Tastkopf nach Anspruch 1, dadurch gekennzeichnet, daß die Blattfederarme (7; $7_2$) kreuzförmig angeordnet sind.

## Claims

1. A multi-coordinate feeler head (1; $1_2$) with at least on feeler rod (4; $4_2$) capable of deflection in a plurality of coordinate directions for feeling an object, wherein the feeler rod (4; $4_2$) is fixed in its housing (2; $2_2$) by means of an elastic suspension (6; $6_2$), characterized in that the elastic suspension (6; $6_2$) consists of a spring element (7, $7_2$) in the form of a plurality of leaf spring arms (7; $7_2$) arranged in a star, wherein the leaf spring arms (7; $7_2$) possess at least one spring component (7a; $7_2$a) running parallel to the feeler rod axis and one running perpendicular to the feeler rod axis.

2. A multi-coordinate feeler head according to claim 1, characterized in that the leaf spring arms (7; $7_2$) comprise an offset (7a; $7_2$a) running parallel to the feeler rod axis and the leaf spring arms (7; $7_2$) run perpendicular to the feeler rod axis before and after the offset.

3. A multi-coordinate feeler head according to claim 1, characterized in that a plurality of spaced spring elements (7; $7_2$) are arranged perpendicular to the feeler rod axis.

4. A multi-coordinate feeler head according to claim 1, characterized in that sensors (13; $13_2$) are provided for detecting the feeling operation.

5. A multi-coordinate feeler head according to claims 3 and 4, characterized in that the sensors (13; $13_2$) are arranged between the spaced spring elements (7; $7_2$) perpendicular to the feeler rod axis.

6. A multi-coordinate feeler head according to claim 4, characterized in that the sensors (13) are so arranged that their measuring axes intersect in a feeler origin which is formed by the centre (15) of a feeler ball (5) which is located on the end of the feeler rod (4).

7. A multi-coordinate feeler head according to claim 4, characterized in that the sensors ($13_2$) are formed as photoelectric length measuring devices and are so arranged that the optical axis of the feeler head ($13_2$b) runs at right angles to the measuring axis of the measuring rod ($13_2$a) and intersects the feeler rod axis in an origin ($P_2$).

8. A multi-coordinate feeler head according to claim 1, characterized in that the leaf spring arms (7; $7_2$) are arranged in a cross.

## Revendications

1. Tête de palpage multi-axes (1; $1_2$) comprenant au moins une touche (4; $4_2$) susceptible d'être déviée suivant plusieurs axes de coordonnées, pour le palpage d'un objet, la touche (4; $4_2$) étant montée à l'aide d'une suspension élastique (6; $6_2$) dans son boîtier (2; $2_2$), caractérisée par le fait que la suspension élastique (6; $6_2$) se compose d'un élément de ressort (7; $7_2$) sous la forme de plusieurs bras de lames de ressort (7; $7_2$) disposés en étoile, les bras de lames de ressort (7; $7_2$) présentant au moins une composante de ressort parallèlement à l'axe de la touche et une composante de ressort (7a; $7_2$a) s'étendant perpendiculairement à l'axe de la touche.

2. Tête de palpage multi-axes suivant revendication 1, caractérisée par le fait que les bras de lames de ressort (7; $7_2$) présentent un déport (partie coudée et contre-coudée 7a; $7_2$a) parallèle à l'axe de la touche et que les bras de lames de ressort (7; $7_2$) s'étendent perpendiculairement à l'axe de la touche en avant et en arrière du déport.

3. Tête de palpage multi-axes suivant revendication 1, caractérisée par le fait que plusieurs éléments de ressort (7; $7_2$) sont disposés en étant espacés perpendiculairement à l'axe de la touche.

4. Tête de palpage multi-axes suivant revendication 1, caractérisée par le fait que des détecteurs (13; $13_2$) sont prévus pour détecter le palpage.

5. Tête de palpage multi-axes suivant les revendications 3 et 4, caractérisée par le fait que les détecteurs (13; $13_2$) sont disposés entre les éléments de ressort (7; $7_2$) espacés perpendiculairement à l'axe de la touche.

6. Tête de palpage multi-axes suivant revendication 4, caractérisée par le fait que les détecteurs (13) sont disposés de manière que leurs axes de mesure se coupent dans un pôle de palpage qui est formé par le centre (15) d'une bille de palpage (5) se trouvant à l'extrémité de la touche (4).

7. Tête de palpage multi-axes suivant revendication 4, caractérisée par le fait que les détecteurs ($13_2$) sont réalisés sous la forme de dispositifs photoélectriques de mesure de longueur et sont disposés de manière que l'axe optique de la tête de palpage ($13_2$b) s'étend à angle droit par rapport à l'axe de mesure de la règle ($13_2$a) et coupe l'axe de la touche dans un pôle (P2).

8. Tête de palpage multi-axes suivant revendication 1, caractérisée par le fait que les bras de lames de ressort (7; $7_2$) sont disposés en croix.

Fig.1

Fig.1a

# Fig.2